# EUROPÄISCHE PATENTSCHRIFT

(11) **EP 1 595 434 B1**
(45) Veröffentlichungstag und Bekanntmachung des Hinweises auf die Patenterteilung: **12.08.2009**
(21) Anmeldenummer: 05103736.4
(22) Anmeldetag: 04.05.2005
(51) Int. Cl.: A01D 57/04

(54) **Haspelzusammenbau**
Reel arrangement
Agencement de rabatteur

(30) Priorität: 15.05.2004 DE 102004024234
(43) Veröffentlichungstag der Anmeldung: 16.11.2005
(73) Patentinhaber: DEERE & COMPANY, Moline, Illinois 61265-8098 (US)
(72) Erfinder: Kempf, Günter, 74238, Krautheim-Gommersdorf (DE); Stahl, Martin, 74238, Krautheim (DE)
(74) Vertreter: Holst, Sönke

(56) Entgegenhaltungen:
- AT-B- 396 860
- US-A- 4 008 558
- US-A- 5 752 372
- US-B1- 6 170 244
- US-B1- 6 442 918

## Beschreibung

Die Erfindung betrifft einen Haspelzusammenbau mit einer Haspel, die an ihren beiden Enden an je einer Haspelhalterung drehbar gelagert ist, zwei Haspelträgerarmen, an denen jeweils eine der Haspelhalterungen entlang des Haspelträgerarms verschiebbar gelagert ist, und einem Horizontalverstellantrieb zum Verschieben der Haspelhalterungen entlang der Haspelträgerarme über einen Verstellbereich.

Schneidwerke finden bei der Getreideernte mit selbstfahrenden Mähdreschern Verwendung. Sie weisen in der Regel einen sich horizontal erstreckenden Messerbalken zum Abschneiden der Halme und eine Querförderschnecke auf, die das abgeschnittene Gut dem Schrägförderer des selbstfahrenden Mähdreschers zuführt. Oberhalb und vor dem Messerbalken ist eine Haspel angeordnet, die dazu dient, das Erntegut zu erfassen und dem Messerbalken und der Querförderschnecke zuzuführen. Die Haspel rotiert um ihre Längsachse und ist mit um ihre Längs- und Drehachse verteilten Zinkenträgern versehen, die ihrerseits Zinken tragen, die in das Erntegut eingreifen.

Die Haspel ist üblicherweise an einer Haspelhalterung drehbar gelagert, die wiederum an einem Haspelträgerarm befestigt ist, welcher an der Rückseite des Schneidwerks um eine horizontale, quer zur Vorwärtsrichtung verlaufende Achse schwenkbar am Rahmen des Schneidwerks angelenkt ist. Durch einen Hydraulikzylinder wird der Schwenkwinkel des Haspelträgerarms um die Achse und damit die Höhe der Haspel über dem Erdboden und dem Schneidwerksboden verstellt. Ein weiterer Hydraulikzylinder ermöglicht eine Verschiebung der Haspel entlang des Haspelträgerarms. Dadurch kann die Position der Haspel in Vorwärtsrichtung variiert werden.

Die Haspelträgerarme sind im Stand der Technik über ihre gesamte Länge gerade (z. B. GB 1 501 639 A, GB 1 574 033 A und WO 03/049532 A) oder mit Biegungen oder Winkeln versehen, wobei der Teil der Länge des Haspelträgerarms, der mit der Haspelhalterung zusammenwirkt, stets gerade ist (s. beispielsweise US 4 800 711 A, US 6 029 429 A, DE 195 08 887 C, DE 195 29 067 A). Beim Verschieben der Haspel entlang des Haspelträgerarms bewegt sich die Haspel somit auf einer Geraden, deren Winkel gegenüber der Horizontalen (d. h. Steigung) vom Schwenkwinkel des Haspelträgerarms um die horizontale Achse abhängt.

Insbesondere bei Schneidwerken mit zweigeteilter Mulde, d. h. mit einem den Messerbalken tragenden vorderen Bodenteil, der in Vorwärtsrichtung gegenüber einem fest mit dem Schneidwerksrahmen verbundenen rückwärtigen Bodenteil bewegbar ist, um das Schneidwerk durch Vorziehen des vorderen Bodenteils an die Ernte beispielsweise von Raps anzupassen, können sich Probleme bei der Einstellung der Haspelposition ergeben, da bei nach vorn verstelltem vorderen Bodenteil Kollisionen zwischen Haspel und dem Schneidwerk möglich sind, insbesondere im Bereich des Messerbalkens, wenn die nach vorn verstellte Haspel zu weit abgesenkt wird.

Es wurde daher vorgeschlagen, Maßnahmen zu treffen, um derartige Kollisionen zu verhindern. In der US 4 800 711 A wird eine mechanische Kopplung zwischen dem Messerbalken und dem Haspelträgerarm mit einem Hebelmechanismus vorgeschlagen, der den Haspelträgerarm selbsttätig in Abhängigkeit von der horizontalen Position des Messerbalkens vertikal bewegt. Eine ähnliche mechanische Kopplung zwischen Haspeltragarm und Messerbalken, die mit einem Steuernocken und einer Steuerrolle versehen ist, wird in der WO 03/049532 A beschrieben. Die DE 195 08 887 C schlägt zur Verhinderung von Kollisionen der Haspel mit dem Messerbalken eine derartige Kopplung vor, die jedoch elektronisch mit einem Sensor für die Position des Messerbalkens und einem mit dem Sensor verbundenen Rechner erfolgt, der einen Aktor ansteuert.

Die bekannte Kopplung zwischen der Position des Messerbalken und der vertikalen Haspelposition ist insofern nachteilig, als der Bediener in für ihn nicht immer nachvollziehbarer Weise bestimmte Haspelpositionen nicht ansteuern kann, da letztere mechanisch oder elektronisch blockiert sind. Außerdem sind die zugehörigen Elemente relativ kostenaufwändig und anfällig gegenüber Verschmutzungen und Beschädigungen.

Das Problem möglicher Kollisionen zwischen der Haspel und dem Messerbalken stellt sich auch bei anderen Typen von Schneidwerken, beispielsweise bei Schneidwerken mit Fördergurten, die das Erntegut nach hinten zur Querförderschnecke transportieren, welche es dann in ihrem mittleren Bereich an den Schrägförderer eines Mähdreschers abgibt (s. GB 1 501 639 A, GB 1 574 033 A und GB 1 602 067 A). Man benötigt einen genügend langen horizontalen Verstellweg der Haspel, um sie zur Aufnahme von Lagergetreide hinreichend weit nach vorn verstellen zu können, sie jedoch für die Rapsernte weit genug nach hinten bewegen zu können, um die Gutmatte unter die Querförderschnecke zu drücken. Dabei sollte die Haspel in der vorderen Position tief genug unter dem Messerbalken arbeiten, in der hinteren Position aber nicht auf den Fördergurten aufsetzen. Dieses Problem könnte zwar durch eine mechanische Anordnung (ähnlich den zuvor beschriebenen Kopplungen zwischen der Position des verstellbaren Messerbalkens und der vertikalen Haspelposition) gelöst werden, die den Haspelarm selbsttätig anhebt, wenn er nach hinten bewegt wird. Sie hätte jedoch die oben erwähnten Nachteile.

Die der Erfindung zu Grunde liegende Aufgabe wird darin gesehen, einen demgegenüber verbesserten Haspelzusammenbau bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Haspelträgerarme innerhalb des Verstellbereichs der Haspelhalterungen nicht gerade zu gestalten, sondern nach oben oder unten zu biegen und/oder abzuwinkeln. Die Haspelträgerarme sind somit im Verstellbereich in sich gekrümmt oder gebogen bzw. aus geraden Teilen zusammengefügt, die einen Winkel einschließen.

Auf diese Weise wird die Haspel bei einer Verschiebung der Haspelhalterung durch den Horizontalverstellantrieb in einer durch die Biegung und/oder Abwinklung definierten Weise nicht nur entlang des Haspelträgerarms verschoben, sondern zusätzlich in der sich quer zur Verstellrichtung erstreckenden Richtung nach oben oder unten bewegt. Die Haspel wird somit durch den Horizontalverstellantrieb auf einer gekrümmten oder abgewinkelten Bahn bewegt. Der Zusammenhang zwischen horizontaler und vertikaler Bewegung kann an die Gegebenheiten des Schneidwerks optimal angepasst werden, sodass unerwünschte Kollisionen der Haspel mit Schneidwerksteilen vermieden und ein optimaler Bewegungsbereich der Haspel realisiert werden können.

Insbesondere kann man durch eine geeignete Formgebung der Haspelträgerarme erreichen, dass die Haspel in ihrer vorderen Position unterhalb eines Messerbalkens arbeitet, während sie in demgegenüber weiter nach hinten verschobenen Positionen sich in relativ geringem Abstand oberhalb der hinter dem Messerbalken befindlichen Elemente des Schneidwerks befindet. Dabei befindet sich der den Schwenkwinkel des Haspelträgerarms um die horizontale Achse definierende Vertikalverstellantrieb der Haspel in seiner tiefsten Position. Diese Formgebung ist insbesondere bei Schneidwerken mit stromab des Messerbalkens angeordneten Fördergurtzusammenbauten vorteilhaft, die das Erntegut nach hinten abfördern und einer Querförderschnecke aufgeben. Sie kann aber auch bei anderen Schneidwerken sinnvoll sein, beispielsweise bei Ausführungsformen mit einem verschiebbaren Messerbalken oder bei Getreideschneidwerken mit festen Messerbalken, die nicht mit Fördergurten ausgestattet sind.

In den Zeichnungen ist ein nachfolgend näher beschriebenes Ausführungsbeispiel der Erfindung dargestellt. Es zeigt:
- Fig. 1: eine schematische Seitenansicht einer Erntemaschine mit einem Schneidwerk,
- Fig. 2: eine vergrößerte seitliche Ansicht der Halterung der Haspel am Haspelträgerarm, und

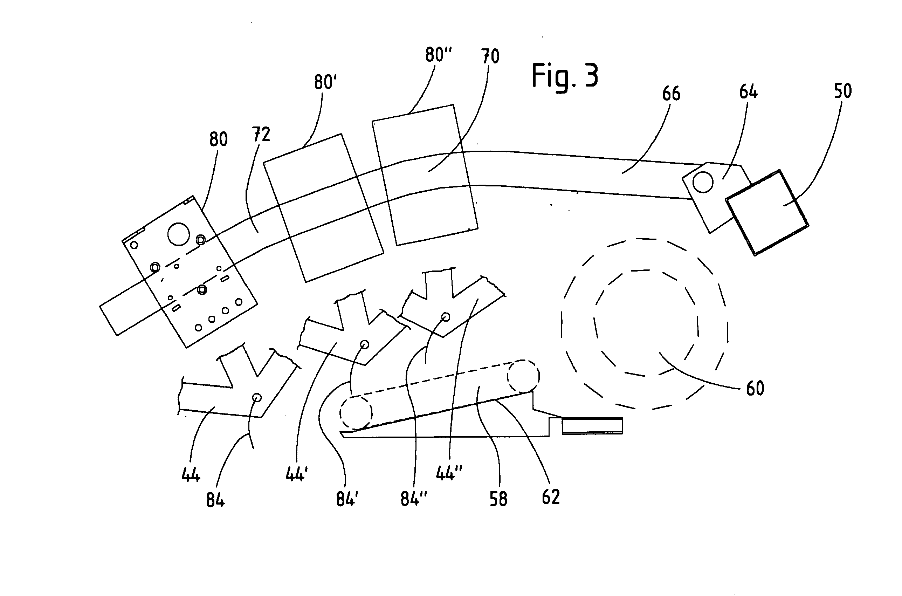

- Fig. 3: eine seitliche teilgeschnittene Ansicht des Schneidwerks, in der drei verschiedene mögliche Positionen der Haspel eingezeichnet sind.

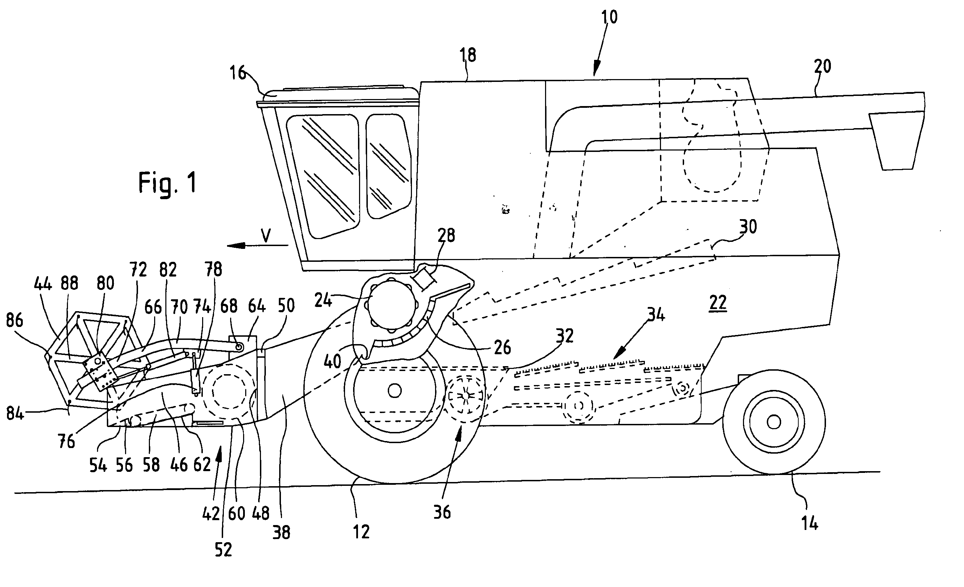

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einem Schneidwerk 42 vom Boden aufgenommen worden ist. Den nachfolgenden Ausführungen ist voranzustellen, dass sich Richtungsangaben, wie vor, hinter, oberhalb und unterhalb, im Folgenden auf die Vorwärtsrichtung V der Erntemaschine 10 beziehen.

Das Schneidwerk 42 umfasst einen Rahmen, der sich aus Seitenwänden 46, einer Rückwand 48 mit einem an ihrer Oberseite angeordneten Querträger 50 und einem Boden 52 zusammensetzt. Der mittlere Bereich des Querträgers 50 wird durch geeignete Mittel, z. B. Haken, lösbar am Schrägförderer 38 angehängt. An der Vorderseite des Bodens 52 ist ein Messerbalken 54 mit sich hin- und herbewegenden Messern angeordnet. In Vorwärtsrichtung V hinter dem Messerbalken 54 befindet sich eine über die Breite des Schneidwerks 42 erstreckende, nach hinten geringfügig abfallende Rampe 56. An der Vorderseite der Seitenwände 46 können Seitenspitzen oder Seitenschneidwerke angebracht werden.

Hinter der Rampe 56 folgen mehrere seitlich nebeneinander angeordnete Fördergurtzusammenbauten 58 mit sich entgegen der Vorwärtsrichtung V nach hinten erstreckender Förderrichtung, hinter denen eine sich quer zur Vorwärtsrichtung V erstreckende Querförderschnecke 60 vorgesehen ist, die sich aus einem Rohr mit daran angeschweißten Förderwendeln und in ihrem mittleren Bereich vorgesehenen gesteuerten Einzugsfingern aufbaut. Die Fördergurtzusammenbauten 58 steigen nach hinten geringfügig an. An ihrer Unterseite befinden sich in ihrer Form an die Fördergurtzusammenbauten 58 und die Querförderschnecke 60 angepasste Bodenbleche 62. Die Anzahl der seitlich nebeneinander angeordneten Fördergurtzusammenbauten 58 hängt von der Breite des Schneidwerks 42 ab und ist grundsätzlich beliebig.

Oberhalb des Messerbalkens 54 und der Fördergurtzusammenbauten 58 befindet sich eine höhenverstell- und in Vorwärtsrichtung verschiebbar am Rahmen angebrachte, antreibbare Haspel 44, die sich quer zur Vorwärtsrichtung V erstreckt. An beiden seitlichen Enden des Rahmens des Schneidwerks 42 ist oberhalb und vor dem Querträger 50 jeweils eine Konsole 64 angeschweißt, an der je ein Haspelträgerarm 66 um eine horizontal und quer zur Vorwärtsrichtung V erstreckende Achse 68 schwenkbar gelagert ist. Die beiden Haspelträgerarme 66 sind vorzugsweise identisch oder zu ihrer Längsmittelebene spiegelsymmetrisch.

Der Haspelträgerarm 66 erstreckt sich von der Achse 68 zunächst gerade nach vorn und knickt dann nach etwa einem Drittel seiner Länge in einer ersten Biegung 70 um einen Winkel nach unten ab. In Vorwärtsrichtung V vor der Biegung 70 erstreckt sich der Haspelträgerarm 66 wiederum gerade nach vorn und knickt dann nach etwa zwei Dritteln seiner Länge in einer zweiten Biegung 72 um einen weiteren Winkel nach unten ab. Vor der zweiten Biegung 72 ist der Haspelträgerarm 66 wiederum gerade. Der Haspelträgerarm 66 ist im Ergebnis etwa bogenförmig geformt. Zum Verschwenken des Haspelträgerarms 66 um die Achse 68 erstreckt sich ein Vertikalverstellantrieb 78 in Form eines Hydraulikzylinders zwischen einer an der Seitenwand 46 angebrachten Halterung 76 und einer unterhalb der ersten Biegung 70 am Haspelträgerarm 66 angeschweißten Konsole 74. Es können in an sich bekannter Weise Mittel zum Justieren des Abstands zwischen der Kolbenstange des Vertikalverstellantriebs 78 und der Konsole 74 vorgesehen sein.

Die Haspel 44 ist an ihren beiden Enden drehbar an einer Haspelhalterung 80 gelagert. Die Haspelhalterung 80 ist ihrerseits verschiebbar am jeweiligen Haspelträgerarm 72 abgestützt. Ein Horizontalverstellantrieb 82 in Form eines Hydraulikzylinders erstreckt sich zwischen der Haspelhalterung 80 und der Konsole 74.

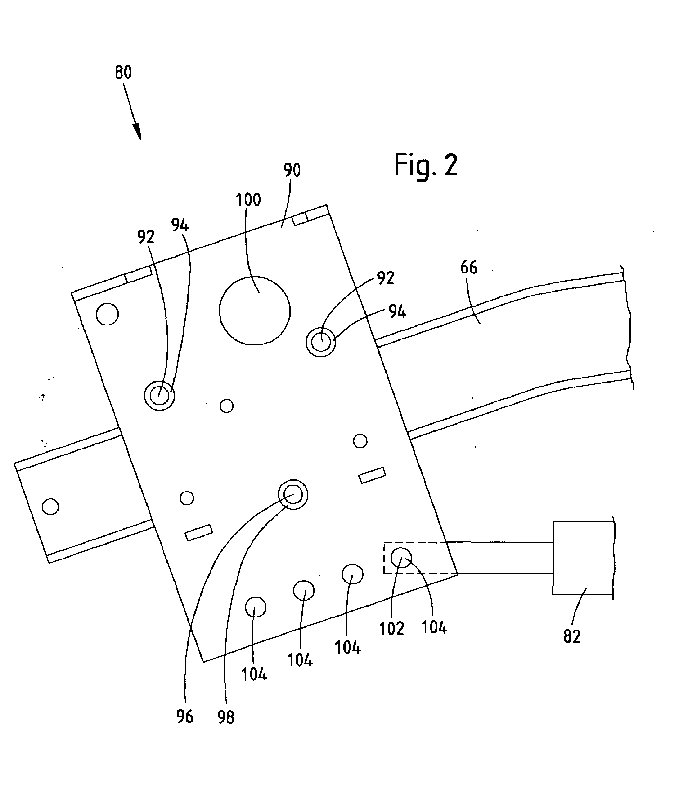

In der Figur 2 ist die Halterung 80 in vergrößerter Darstellung wiedergegeben. Sie umfasst sich vertikal erstreckende Seitenplatten 90, zwischen denen der Haspelträgerarm 66 angeordnet ist. Oberhalb des Haspelträgerarms 66 werden die Seitenplatten 90 durch zwei in Vorwärtsrichtung beabstandete Bolzen 92 verbunden, auf denen jeweils eine hohlzylindrische Rolle 94, die an der Oberseite des Haspelträgerarms 66 aufliegt, drehbar gelagert ist. Ein weiterer Bolzen 96 erstreckt sich unterhalb des Haspelträgerarms 66 und trägt eine drehbare hohlzylindrische Rolle 98, die an der Unterseite des Haspelträgerarms 66 anliegt. Es wäre denkbar, an der Unterseite des Haspelträgerarms 66 zwei Bolzen 96 mit Rollen 98 hintereinander anzuordnen, um die Halterung 80 stabiler zu lagern. Durch die Rollen 92 und 98 ist die Halterung 80 verschiebbar am Haspelträgerarm 66 gelagert. Eine Öffnung 100 in der Halterung 80 dient zur Lagerung der Haspel 44. Der Kolben des Horizontalverstellantriebs 82 ist über einen sich zwischen den Seitenplatten 90 erstreckenden Bolzen 102 mit der Halterung 80 verbunden. Der Bolzen 102 kann in je eine von vier Bohrungen 104 an der Unterseite der Seitenplatten 90 eingesteckt werden. Dadurch wird der Verstellbereich der Halterung 80 bei gegebenem Verstellweg des Horizontalverstellantriebs 82 verlängert.

Durch einen in den Figuren nicht dargestellten Hydromotor, der vorzugsweise an ihrem in Vorwärtsrichtung rechts befindlichen Ende angeordnet ist, kann die Haspel 44 um ihre Längsachse in Rotation versetzt werden. Sie dreht sich im Erntebetrieb, betrachtet man die Figur 1, im Gegenuhrzeigersinn.

Die Haspel 44 ist mit sechs an Tragsternen 88 befestigten Zinkenträgern 86 ausgestattet, die jeweils nebeneinander angeordnete Zinken 84 tragen. Durch übliche Steuerungsmechanismen wird die Stellung der Zinkenträger und der Zinken 84 während der Umdrehung der Haspel 44 variiert, so dass sich die Zinken 84 stets näherungsweise von den Zinkenträgern nach unten und geringfügig nach hinten erstrecken. Derartige Steuerungsmechanismen können Exzenterhebel umfassen, wie sie in der US 4 008 558 A beschrieben sind, oder in Kurvenbahnen laufende Nocken, wie in der EP 1 048 199 A offenbart.

Die Kurvenbahnen oder Exzenterhebel können um die Achse der Haspel 44 verstellt werden, um die Winkelstellung der Zinken 84 den jeweiligen Anforderungen anpassen zu können. Die Kurvenbahnen oder Steuerelemente für die Exzenterhebel rotieren nicht mit der Haspel 44 und sind daher an der Halterung 80 befestigt, in der Regel an einer Bohrung 106. Die Halterung 80 ändert bei einer Bewegung entlang des Haspelträgerarms 66 aufgrund seiner Biegung 72 ihre Orientierung, d. h. sie dreht um eine horizontal und quer zur Vorwärtsrichtung V orientierte Achse. Da sich dadurch die Stellung der Zinken 84 ändern würde, könnte man eine zweite Halterung, die sich nur zwischen den Biegungen 70 und 72 auf dem Haspelträgerarm 66 bewegt und mit der Halterung 80 gekoppelt ist und sich synchron mit ihr bewegt, mit den Kurvenbahnen oder Steuerelementen für die Exzenterhebel verbinden.

In der Figur sind die Halterung 80 und die unteren Abschnitte der Haspel 44 in drei möglichen Positionen eingezeichnet. An der vordersten Position, in der die Haspel mit 44 und die Halterung mit 80 gekennzeichnet sind, liegt die Haspel 44 hinreichend weit vorn und die Zinken 84 befinden sich unterhalb des Messerbalkens 54, um Lagergetreide aufzunehmen. An der hintersten Position, in der die Haspel mit 44'' und die Halterung mit 80'' gekennzeichnet sind, liegt die Haspel 44 hinreichend weit hinten, um bei der Rapsernte Raps auf die Querförderschnecke 60 zu drücken. In der mittleren Position befindet sich die Haspel 44' oberhalb der Fördergurtzusammenbauten 58.

Es ist erkennbar, dass die Bewegung der Halterung 80 mit der Haspel 44 entlang des Haspelträgerarms 66 eine Bewegung auf einer Kurvenbahn bewirkt, die von vorn nach hinten zunächst steil und dann hinter der Biegung 72 flacher verläuft. Die Form des Haspelträgerarms 66 ist an den Messerbalken 54 und die Fördergurtzusammenbauten 58 angepasst.

## Patentansprüche

1. Haspelzusammenbau mit einer Haspel (44), die an ihren beiden Enden an je einer Haspelhalterung (80) drehbar gelagert ist, zwei Haspelträgerarmen (66), an denen jeweils eine der Haspelhalterungen (80) entlang des Haspelträgerarms (66) verschiebbar gelagert ist, und mit einem Horizontalverstellantrieb (82) zum Verschieben der Haspelhalterungen (80) entlang der Haspelträgerarme (60) über einen Verstellbereich, **dadurch gekennzeichnet, dass** die Haspelträgerarme (66) innerhalb des Verstellbereichs, über den die Haspelhalterungen (80) durch den Antrieb verschoben werden können, mit einer nach oben oder unten gerichteten Biegung (72) und/oder Abwinkelung ausgestattet sind.

2. Schneidwerk (42) mit einem Haspelzusammenbau nach Anspruch 1.

3. Schneidwerk (42) nach Anspruch 2, **dadurch gekennzeichnet, dass** die Haspelträgerarme (66) derart geformt sind, dass die Haspel in ihrer vorderen Position unterhalb eines Messerbalkens (54) arbeitet und in demgegenüber weiter nach hinten verschobenen Positionen sich in relativ geringem Abstand oberhalb der hinter dem Messerbalken (54) befindlichen Elemente des Schneidwerks (42) befindet, wobei ein den Schwenkwinkel des Haspelträgerarms (66) um die horizontale Achse (68) definierender Vertikalverstellantrieb (78) der Haspel (44) in seiner tiefsten Position steht.

4. Schneidwerk (42) nach Anspruch 3, **dadurch gekennzeichnet, dass** sich hinter dem Messerbalken (54) Fördergurtzusammenbauten (58) befinden.

5. Schneidwerk (42) nach einem der Ansprüche 2 bis 4, **dadurch gekennzeichnet, dass** die Haspel (44) mit Zinkenträgern (86) und daran befestigten Zinken (84) ausgestattet ist, dass die Zinkenträger (86) mit einer Steuerung zur haspeldrehwinkelabhängigen Ausrichtung der Zinken (84) zusammenwirken, und dass die Steuerung mit Mitteln versehen ist, die eine von der Position des Horizontalverstellantriebs (82) unabhängige Drehstellung der Zinken (84) ermöglichen.

## Claims

1. Reel arrangement, with a reel (44) which is mounted rotatably at both of its ends on a respective reel mounting (80), two reel support arms (66) on each of which one of the reel mountings (80) is mounted displaceably along the reel support arm (66), and with a horizontal adjusting drive (82) for displacing the reel mountings (80) over an adjustment region along the reel support arms (60), **characterized in that** the reel support arms (66) are equipped within the adjustment region, over which the reel mountings (80) can be displaced by means of the drive, with an upwardly or downwardly directed curvature (72) and/or angled portion.

2. Mower (42) with a reel arrangement according to Claim 1.

3. Mower (42) according to Claim 2, **characterized in that** the reel support arms (66) are shaped in such a manner that the reel operates in its front position below a cutter bar (54) and, in positions which, by contrast, are displaced to the rear, is located at a relatively small distance above those elements of the mower (42) which are located behind the cutter bar (54), with a vertical adjustment drive (78) of the reel (44), which vertical adjustment drive defines the pivoting angle of the reel support arm (66) about the horizontal axis (68), being in its lowermost position.

4. Mower (42) according to Claim 3, **characterized in that** the belt conveyor assemblies (58) are located behind the cutter bar (54).

5. Mower (42) according to one of Claims 2 to 4, **characterized in that** the reel (44) is equipped with prong supports (86) and prongs (84) which are fastened thereon, **in that** the prong supports (86) interact with a controlling means for orienting the prongs (84) as a function of the angle of rotation of the reel, and **in that** the controlling means is provided with means which permit a rotational position of the prongs (84) independently of the position of the horizontal adjustment drive (82).

## Revendications

1. Agencement de rabatteur comprenant un rabatteur (44), qui est monté à rotation à ses deux extrémités sur un support de rabatteur respectif (80), deux bras de support de rabatteur (66) sur lesquels est monté de manière déplaçable à chaque fois l'un des supports de rabatteur (80) le long du bras de support de rabatteur (66), et comprenant un entraînement de réglage horizontal (82) pour déplacer les supports de rabatteur (80) le long des bras de support de rabatteur (60) par le biais d'une plage de réglage, **caractérisé en ce que** les bras de support de rabatteur (66) sont configurés avec une courbure (72) et/ou un coudage orienté(e) vers le haut ou vers le bas, à l'intérieur de la plage de réglage, sur laquelle les supports de rabatteur (80) peuvent être déplacés par l'entraînement.

2. Mécanisme de coupe (42) comprenant un rabatteur selon la revendication 1.

3. Mécanisme de coupe (42) selon la revendication 2, **caractérisé en ce que** les bras de support de rabatteur (66) sont formés de telle sorte que le rabatteur travaille dans sa position avant sous une barre à couteaux (54) et se trouve dans des positions déplacées plus vers l'arrière par rapport à celle-ci, à relativement faible distance au-dessus des éléments du mécanisme de coupe (42) se trouvant derrière la barre à couteaux (54), un entraînement de réglage vertical (78) du rabatteur (44), définissant l'angle de pivotement du bras de support de rabatteur (66) autour de l'axe horizontal (68), se trouvant dans sa position la plus basse.

4. Mécanisme de coupe (42) selon la revendication 3, **caractérisé en ce que** des assemblages de courroie transporteuse (58) se trouvent derrière la barre à couteaux (54).

5. Mécanisme de coupe (42) selon l'une quelconque des revendications 2 à 4, **caractérisé en ce que** le rabatteur (44) est muni de supports à dents (86) et de dents (84) fixées dessus, **en ce que** les supports à dents (86) coopèrent avec une commande pour l'orientation des dents (84) en fonction de l'angle de rotation du rabatteur et **en ce que** la commande est pourvue de moyens qui permettent une position de rotation des dents (84) indépendante de la position de l'entraînement de réglage horizontal (82).
